# EUROPEAN PATENT APPLICATION

(11) **EP 4 723 272 A1**
(43) Date of publication of application: **08.04.2026**
(21) Application number: 24943687.4
(22) Date of filing: 31.07.2024
(51) Int. Cl.: H01M 10/0525, H01M 4/36, H01M 4/62, H01M 4/13, H01M 4/131, H01M 4/136, H01M 4/04

(54) **SOLID ELECTROLYTE MATERIAL AND PREPARATION METHOD THEREFOR, POSITIVE ELECTRODE ACTIVE MATERIAL AND PREPARATION METHOD THEREFOR, POSITIVE ELECTRODE SHEET, BATTERY, AND ELECTRIC DEVICE**

(30) Priority: 21.06.2024 CN 202410814749
(71) Applicant: Beijing Easpring Material Technology Co., Ltd., Beijing 100160 (CN)
(72) Inventor: SHAO, Zongpu, Beijing 100160 (CN); LIU, Yafei, Beijing 100160 (CN); CHEN, Yanbin, Beijing 100160 (CN)
(74) Representative: Nederlandsch Octrooibureau
(86) International application number: PCT/CN2024/109049
(87) International publication number: WO 2025/260458

(57) **Abstract**

The present disclosure provides a solid-state electrolyte material and a preparation method thereof, a cathode active material and a preparation method thereof, a cathode plate, a battery, and an electrical device, which are related to the field of battery technologies. The solid-state electrolyte material has a NASICON crystal structure. In an X-ray diffraction pattern of the solid-state electrolyte material, a 20 value of a diffraction peak representing LiTi₂(PO₄)₃ is decreased by 0.02 °to 0.06 °compared with a 20 value of a corresponding diffraction peak in a standard pattern of LiTi₂(PO₄)₃. Thus, use of the solid-state electrolyte material enables a battery loaded with the solid-state electrolyte material to have excellent rate performance.

## Description

### CROSS-REFERENCE TO RELATED APPLICATION

This application claims priority to and benefits of Chinese patent application No. 202410814749.3, filed with China National Intellectual Property Administration on June 21, 2024, the entire contents of which are incorporated herein by reference.

### FIELD

The present disclosure relates to the field of batteries, and more particularly, to a solid-state electrolyte material and a preparation method thereof, a cathode active material and a preparation method thereof, a cathode plate, a battery, and an electrical device.

### BACKGROUND

Range anxiety and battery safety issues have become pain points and major bottlenecks restricting the development of new energy vehicles. The key to iterative innovation of the next-generation power batteries with higher energy density and safer lies in the technological breakthroughs of solid-state batteries. As a core material of the solid-state battery, the comprehensive performance and an industrialization progress of a solid-state electrolyte are key factors to the development of the solid-state battery. Currently, the solid-state electrolyte with industrialization prospects mainly includes three major systems: a polymer, a sulfide, and an oxide. Among them, a sulfide electrolyte has a high conductivity, but their manufacturing cost is high and their structure is unstable, and there are huge challenges in large-scale production and integration into vehicles. A polymer solid-state electrolyte is soft in texture and easy to process, but it has a low ionic conductivity at a room temperature and cannot withstand voltages above 4.0V. A NASICON-type oxide solid-state electrolyte features a stable structure, a low cost, and a relatively high voltage window, facilitating the iteration from a semi-solid-state battery, a quasi-solid-state battery, to an all-solid-state battery. However, an ionic conductivity of a current oxide solid-state electrolyte is still lower than that of the electrolyte, which affects rate performance and cycle performance of the battery.

### SUMMARY

The present disclosure aims to solve at least one of the technical problems in the related art. To this end, an objective of the present disclosure is to provide a solid-state electrolyte material and a preparation method thereof, a cathode active material and a preparation method thereof, a cathode plate, a battery, and an electrical device. The solid-state electrolyte material has a high ionic conductivity, enabling a battery containing the solid-state electrolyte material to have excellent rate performance.

In a first aspect of the present disclosure, a solid-state electrolyte material is provided. The solid-state electrolyte material has a Na Super Ionic Conductor, NASICON, crystal structure. In an X-ray diffraction pattern of the solid-state electrolyte material, a 20 value of a diffraction peak representing LiTi₂(PO₄)₃ is decreased by 0.02 °to 0.06 °compared with a 20 value of a corresponding diffraction peak in a standard pattern of LiTi₂(PO₄)₃.

According to the solid-state electrolyte material of an embodiment of the present disclosure, the 20 value of the diffraction peak representing LiTi₂(PO₄)₃ is decreased by 0.02 ° to 0.06 ° compared with the 20 value of the corresponding diffraction peak in the standard pattern of LiTi₂(PO₄)₃. In this way, unit cell parameters and a unit cell volume of the solid-state electrolyte material are increased. As a result, a transport channel for lithium ions is widened, and the ionic conductivity of the solid-state electrolyte material can be improved, enabling the battery containing the solid-state electrolyte material to have the excellent rate performance.

In addition, the solid-state electrolyte material according to the above-described embodiment of the present disclosure may also have the following additional technical features.

In some embodiments of the present disclosure, the diffraction peak representing LiTi₂(PO₄)₃ includes a diffraction peak (012), a diffraction peak (104), a diffraction peak (113), and a diffraction peak (024). Thus, the ionic conductivity of the solid-state electrolyte material can be further improved, enabling the battery containing the solid-state electrolyte material to have the excellent rate performance.

In some embodiments of the present disclosure, compared with unit cell parameters, a-value and c-value, of LiTi₂(PO₄)₃, a-value of the solid-state electrolyte material is increased by 0.002Å to 0.006Å, and c-value of the solid-state electrolyte material is increased by 0.01Å to 0.03Å, respectively. Thus, the ionic conductivity of the solid-state electrolyte material can be further improved, enabling the battery containing the solid-state electrolyte material to have the excellent rate performance.

In some embodiments of the present disclosure, compared with a unit cell volume of LiTi₂(PO₄)₃, a unit cell volume of the solid-state electrolyte material is increased by 1Å³ to 3Å³. Thus, the ionic conductivity of the solid-state electrolyte material can be further improved, enabling the battery containing the solid-state electrolyte material to have the excellent rate performance.

In some embodiments of the present disclosure, in the X-ray diffraction pattern of the solid-state electrolyte material, the solid-state electrolyte material has a diffraction peak (721) at a diffraction angle 20 value ranging from 27.7° to 27.8°, a peak intensity I₁ of the diffraction peak (721) and a peak intensity I₂ of the diffraction peak (113) satisfy 0.1≤I₁/I₂≤0.5. Thus, the ionic conductivity of the solid-state electrolyte material can be further improved, enabling the battery containing the solid-state electrolyte material to have the excellent rate performance.

In some embodiments of the present disclosure, an ionic conductivity of the solid-state electrolyte material is greater than or equal to 5×10⁻⁴S/cm, and optionally greater than or equal to 1×10⁻³S/cm. Thus, the ionic conductivity of the solid-state electrolyte material can be further improved, enabling the battery containing the solid-state electrolyte material to have the excellent rate performance.

In some embodiments of the present disclosure, an average particle size of the solid-state electrolyte material ranges from 0.05 µm to 0.5 µm, and preferably ranges from 0.05 µm to 0.1 µm. Thus, the ionic conductivity of the solid-state electrolyte material can be further improved, enabling the battery containing the solid-state electrolyte material to have the excellent rate performance.

In some embodiments of the present disclosure, a pH value of the solid-state electrolyte material ranges from 6 to 10 at 25°C. Thus, the ionic conductivity of the solid-state electrolyte material can be further improved, enabling the battery containing the solid-state electrolyte material to have the excellent rate performance.

In some embodiments of the present disclosure, the solid-state electrolyte material includes LiₓM¹_{y}M²_{z}Tiᵤ(PO₄)ᵥ₁(P₂O₇)ᵥ₂, where: M¹ includes at least one of the elements in Group 1 of the periodic table, excluding Li; M² includes at least one of trivalent metal elements; and 1≤x<4, 0.1≤y≤0.5, 0.2<z≤0.5, 1<u≤5.5, 2≤v1≤6, and 0.1<v2≤3. Thus, the ionic conductivity of the solid-state electrolyte material can be further improved, enabling the battery containing the solid-state electrolyte material to have the excellent rate performance.

In some embodiments of the present disclosure, M¹ includes at least one of K, Rb, or Cs. Thus, the ionic conductivity of the solid-state electrolyte material can be further improved, enabling the battery containing the solid-state electrolyte material to have the excellent rate performance.

In some embodiments of the present disclosure, M² includes at least one of V, La, or Cr. Thus, the ionic conductivity of the solid-state electrolyte material can be further improved, enabling the battery containing the solid-state electrolyte material to have the excellent rate performance.

In a second aspect of the present disclosure, a method for preparing the above-described solid-state electrolyte material is provided. The method includes: mixing an M² source, a Ti source, a PO₄³⁻ source, a P₂O₇⁴⁻ source, a precipitant, and a solvent, co-precipitating, and filtering to obtain a precursor; and mixing the precursor with a Li source and an M¹ source, and sintering the mixture in an oxygen-containing atmosphere to obtain the solid-state electrolyte material.

Therefore, the above-described solid-state electrolyte material can be prepared by using this method. The introduction of pyrophosphate ion and the doping of elements M¹ and M² into a unit cell of a conventional LiTi₂(PO₄)₃ structure lead to an increase in the unit cell parameters and the unit cell volume. As a result, the transport channel for the lithium ions is widened, and the ionic conductivity of the solid-state electrolyte material can be improved, enabling the battery containing the solid-state electrolyte material to have the excellent rate performance.

In some embodiments of the present disclosure, the oxygen-containing atmosphere includes oxygen or air. Thus, the ionic conductivity of the solid-state electrolyte material can be further improved, enabling the battery containing the solid-state electrolyte material to have the excellent rate performance.

In some embodiments of the present disclosure, a temperature of the sintering ranges from 600°C to 800°C, and a duration of the sintering ranges from 4 hours to 10 hours. Thus, the ionic conductivity of the solid-state electrolyte material can be further improved, enabling the battery containing the solid-state electrolyte material to have the excellent rate performance.

In some embodiments of the present disclosure, the M¹ source includes at least one of an M¹-containing oxide, an M¹-containing phosphate, an M¹-containing sulfate, an M¹-containing chloride, an M¹-containing nitrate, or an M¹-containing carbonate. Thus, the ionic conductivity of the solid-state electrolyte material can be further improved, enabling the battery containing the solid-state electrolyte material to have the excellent rate performance.

In some embodiments of the present disclosure, the M² source includes at least one of an M²-containing oxide, an M²-containing phosphate, an M²-containing sulfate, an M²-containing chloride, an M²-containing nitrate, or an M²-containing carbonate. Thus, the ionic conductivity of the solid-state electrolyte material can be further improved, enabling the battery containing the solid-state electrolyte material to have the excellent rate performance.

In some embodiments of the present disclosure, the Ti source includes at least one of a Ti-containing phosphate, a Ti-containing acetate, a Ti-containing sulfate, a Ti-containing chloride, a Ti-containing nitrate, or a Ti-containing carbonate. Thus, the ionic conductivity of the solid-state electrolyte material can be further improved, enabling the battery containing the solid-state electrolyte material to have the excellent rate performance.

In some embodiments of the present disclosure, the PO₄³⁻ source includes at least one of H₃PO₄, NH₄H₂PO₄, (NH₄)₂HPO₄, (NH₄)₃PO₄, LiH₂PO₄, Li₂HPO₄, Li₃PO₄, NaH₂PO₄, Na₂HPO₄, or Na₃PO₄. Thus, the ionic conductivity of the solid-state electrolyte material can be further improved, enabling the battery containing the solid-state electrolyte material to have the excellent rate performance.

In some embodiments of the present disclosure, the Li source includes at least one of lithium carbonate, lithium hydroxide, or lithium nitrate. Thus, the ionic conductivity of the solid-state electrolyte material can be further improved, enabling the battery containing the solid-state electrolyte material to have the excellent rate performance.

In some embodiments of the present disclosure, the P₂O₇⁴⁻ source includes at least one of H₄P₂O₇, (NH₄)₂H₂P₂O₇, Li₂H₂P₂O₇, or Li₄P₂O₇. Thus, the ionic conductivity of the solid-state electrolyte material can be further improved, enabling the battery containing the solid-state electrolyte material to have the excellent rate performance.

In some embodiments of the present disclosure, the precipitant includes at least one of sodium hydroxide, sodium carbonate, or ammonia water. Thus, the ionic conductivity of the solid-state electrolyte material can be further improved, enabling the battery containing the solid-state electrolyte material to have the excellent rate performance.

In a third aspect of the present disclosure, a cathode active material is provided. The cathode active material includes a matrix, and a coating layer disposed on at least part of a surface of the matrix. The coating layer includes the solid-state electrolyte material according to the first aspect of the present disclosure or the solid-state electrolyte material prepared by the method according to the second aspect of the present disclosure. Thus, a surface of the cathode active material is coated with the solid-state electrolyte material. The introduction of pyrophosphate ion and the doping of elements M¹ and M² into a unit cell of a conventional LiTi₂(PO₄)₃ structure lead to an increase in the unit cell parameters and the unit cell volume. As a result, the transport channel for the lithium ions is widened, and an ionic conductivity of the cathode active material can be improved, enabling the battery containing the cathode active material to have the excellent rate performance.

In some embodiments of the present disclosure, a thickness of the coating layer ranges from 10 nm to 500 nm. Thus, the prepared cathode active material has a high ionic conductivity, enabling the battery containing the cathode active material to have the excellent rate performance.

In some embodiments of the present disclosure, based on a total mass of the cathode active material, a mass proportion of the solid-state electrolyte material ranges from 0.01% to 1%. Thus, the prepared cathode active material has the high ionic conductivity, enabling the battery containing the cathode active material to have the excellent rate performance.

In some embodiments of the present disclosure, in a Differential Scanning Calorimetry, DSC, measurement curve of the cathode active material, a temperature corresponding to an exothermic peak is greater than or equal to 220°C. Thus, the prepared cathode active material has the high ionic conductivity, enabling the battery containing the cathode active material to have the excellent rate performance.

In some embodiments of the present disclosure, the matrix includes at least one of lithium cobalt oxide, lithium manganate, lithium nickel oxide, lithium nickel cobalt manganese oxide, lithium nickel cobalt aluminum oxide, lithium manganate, lithium nickel manganate, lithium iron phosphate, lithium manganese phosphate, or lithium manganese iron phosphate. Thus, the prepared cathode active material has the high ionic conductivity, enabling the battery containing the cathode active material to have the excellent rate performance.

In a fourth aspect of the present disclosure, a method for preparing the cathode active material according the third aspect is provided. The method includes: grinding the solid-state electrolyte material into nanoparticles, and mixing the nanoparticles with the matrix to obtain a mixture; and performing heat treatment on the mixture in an oxygen-containing atmosphere to obtain the cathode active material.

Therefore, the prepared cathode active material includes the matrix, and the coating layer disposed on at least part of the surface of the matrix. The coating layer includes the solid-state electrolyte material according to the first aspect of the present disclosure or the solid-state electrolyte material prepared by the method according to the second aspect of the present disclosure. Thus, the surface of the cathode active material is coated with the solid-state electrolyte material. For the solid-state electrolyte material, the introduction of pyrophosphate ion and the doping of elements M¹ and M² into a unit cell of a conventional LiTi₂(PO₄)₃ structure lead to an increase in the unit cell parameters and the unit cell volume. As a result, the transport channel for the lithium ions is widened, and the ionic conductivity of the solid-state electrolyte material can be improved, enabling the battery containing the solid-state electrolyte material to have the excellent rate performance.

In some embodiments of the present disclosure, the oxygen-containing atmosphere includes oxygen or air. Optionally, a temperature of the heat treatment ranges from 300°C to 500°C, and a duration of the heat treatment ranges from 2 hours to 8 hours.

Thus, the prepared cathode active material has the high ionic conductivity, enabling the battery containing the cathode active material to have the excellent rate performance.

In a fifth aspect of the present disclosure, a cathode plate is provided. The cathode plate includes the cathode active material according to the third aspect of the present disclosure, or the cathode active material prepared by the method according to the fourth aspect of the present disclosure.

In a sixth aspect of the present disclosure, a battery is provided. The battery includes at least one of the solid-state electrolyte material according to the first aspect of the present disclosure, the solid-state electrolyte material prepared by the method according to the second aspect, and the cathode plate according to the fifth aspect. Thus, the battery has excellent electrochemical performance.

In a seventh aspect of the present disclosure, an electrical device is provided. The electrical device includes the battery according to the sixth aspect of the present disclosure.

Additional aspects and advantages of the present disclosure will be provided at least in part in the following description, or will become apparent at least in part from the following description, or can be learned from practicing of the present disclosure.

### BRIEF DESCRIPTION OF THE DRAWINGS

FIG. 1 is an XRD pattern of solid-state electrolyte materials of Comparative Example 1 and Example 1 to Example 4 of the present disclosure at a 20 value of 10° to 70°.
FIG. 2 is an XRD pattern of solid-state electrolyte materials of Comparative Example 1 and Example 1 to Example 4 of the present disclosure at a 2θ value of 10° to 30°.
FIG. 3 is a SEM image of a solid-state electrolyte material of Example 1 of the present disclosure.

### DETAILED DESCRIPTION OF THE EMBODIMENTS

Embodiments of the present disclosure will be described in detail below. The examples of embodiments are as illustrated in the accompanying drawings, throughout which same or similar elements, or elements having same or similar functions, are denoted by same or similar reference numerals. The embodiments described below with reference to the drawings are illustrative only, and are intended to explain, rather than limit, the present disclosure.

Endpoints and any values of the ranges disclosed in the present disclosure are not limited to the precise ranges or values. These ranges or values should be understood to include values close to these ranges or values. For numerical ranges, the endpoint values of each range, the endpoint values of each range and individual point values, and the individual point values can be combined with each other to obtain one or more new numerical ranges, which should be considered as specifically disclosed in the present disclosure.

In an aspect of the present disclosure, a solid-state electrolyte material is provided. The solid-state electrolyte material has a NASICON crystal structure. In an X-ray diffraction pattern of the solid-state electrolyte material, a 20 value of a diffraction peak representing LiTi₂(PO₄)₃ is decreased by 0.02 ° to 0.06 ° compared with a 20 value of a corresponding diffraction peak in a standard pattern of LiTi₂(PO₄)₃.

As an example, the 20 value of the diffraction peak representing LiTi₂(PO₄)₃ may be decreased by 0.02°, 0.03°, 0.04°, 0.05°, 0.06°, etc. compared with the 20 value of the corresponding diffraction peak in the standard pattern of LiTi₂(PO₄)₃ (PDF#35-0754).

It should be understood that, in the X-ray diffraction pattern of the solid-state electrolyte material, one or a plurality of diffraction peaks representing LiTi₂(PO₄)₃ may exist. When a plurality of diffraction peaks representing LiTi₂(PO₄)₃ exist, the 20 value corresponding to each peak is decreased by 0.02° to 0.06° compared with the 20 value of the diffraction peak at a corresponding position in the standard pattern. In addition, when a plurality of diffraction peaks exist, cases where only one diffraction peak exhibits a 20 value decreased by 0.02° to 0.06° compared with the diffraction peak at the corresponding position in the standard pattern, or where not all diffraction peaks exhibit a 20 value decreased by 0.02° to 0.06° compared with the diffraction peaks at the corresponding positions in the standard pattern, also fall within the protection scope of the present disclosure.

The inventors found that, in the X-ray diffraction pattern of the solid-state electrolyte material, the 20 value of the diffraction peak representing LiTi₂(PO₄)₃ is decreased by 0.02° to 0.06° compared with the 20 value of the corresponding diffraction peak in the standard pattern of LiTi₂(PO₄)₃. According to Bragg's Law: 2dsinθ=nλ, for X-ray diffraction, when an optical path difference is an integer multiple of a wavelength, a diffraction ray of a crystal plane will be intensified, where d is an interplanar spacing, θ is an angle between an incident ray, a reflection ray, and a reflection crystal plane, λ is a wavelength, and n is a reflection order. When the detection wavelength is constant, a decrease in the 20 value means an increase in the interplanar spacing d, and the corresponding unit cell parameters and unit cell volume will also be increased accordingly. Therefore, compared with a standard LiTi₂(PO₄)₃ crystal, a crystal of the obtained solid-state electrolyte material has increased unit cell parameters and unit cell volume. As a result, a transport channel for lithium ions is widened, and an ionic conductivity of the solid-state electrolyte material is improved, enabling a battery containing the solid-state electrolyte material to have excellent rate performance.

According to an embodiment of the present disclosure, the diffraction peaks representing LiTi₂(PO₄)₃ include a diffraction peak (012), a diffraction peak (104), a diffraction peak (113), and a diffraction peak (024). The 20 values corresponding to the above-described diffraction peaks are 14.685°, 20.843°, 24.491° and 29.641°, respectively. Therefore, the 20 values of the above-described diffraction peaks are decreased by 0.02° to 0.06° compared with the 20 value corresponding to the standard pattern. As a result, the ionic conductivity of the solid-state electrolyte material can be further improved, enabling the battery containing the solid-state electrolyte material to have excellent rate performance.

According to an embodiment of the present disclosure, compared with unit cell parameters of LiTi₂(PO₄)₃, a unit cell parameter a-value of the solid-state electrolyte material is increased by 0.002Å to 0.006Å, and a unit cell parameter c-value of the solid-state electrolyte material is increased by 0.01Å to 0.03Å. That is, the unit cell parameters of the solid-state electrolyte material of the embodiment of the present disclosure are larger than those of the standard LiTi₂(PO₄)₃. For example, the a-value may be increased by 0.002Å, 0.003Å, 0.004Å, 0.005Å, 0.006Å, etc., and the c-value may be increased by 0.01Å, 0.02Å, 0.03Å, etc. Therefore, the unit cell parameters and the unit cell volume of the crystal of the solid-state electrolyte material of the embodiment of the present disclosure are increased compared with the standard LiTi₂(PO₄)₃ crystal. Thus, the transport channel for the lithium ions is widened, and the ionic conductivity of the solid-state electrolyte material can be improved, enabling the battery containing the solid-state electrolyte material to have the excellent rate performance.

According to an embodiment of the present disclosure, compared with a unit cell volume of LiTi₂(PO₄)₃, a unit cell volume of the solid-state electrolyte material is increased by 1Å³ to 3Å³, for example, 1Å³, 2Å³, 3Å³, etc. Thus, the transport channel for the lithium ions is widened, and the ionic conductivity of the solid-state electrolyte material can be improved, enabling the battery containing the solid-state electrolyte material to have the excellent rate performance.

According to an embodiment of the present disclosure, in the X-ray diffraction pattern of the solid-state electrolyte material, a diffraction peak (721) is present at a diffraction angle 20 value ranging from 27.7° to 27.8°, a peak intensity of the diffraction peak (721) is I₁; a peak intensity of the diffraction peak (113) is I₂; where 0.1≤I₁/I₂≤0.5. For example, I₁/I₂ may be 0.1, 0.2, 0.3, 0.4, 0.5, etc. Specifically, the diffraction peak (721) is a diffraction peak of pyrophosphate, the diffraction peak (113) is a diffraction peak of LiTi₂(PO₄)₃, and a ratio of the peak intensity of the diffraction peak (721) to the peak intensity of the diffraction peak (113) is controlled within the above-described range. When the pyrophosphate ion is introduced into a unit cell of a LiTi₂(PO₄)₃ structure, and a content of the pyrophosphate in the solid-state electrolyte material is moderate, the unit cell parameters and the unit cell volume of the crystal of the solid-state electrolyte material are increased. This is because, compared with phosphate ion, pyrophosphate ion has a greater number of extranuclear electrons and a larger ionic radius. Therefore, by complexing with the pyrophosphate ion, the unit cell parameters of the solid-state electrolyte are increased accordingly. Thus, the transport channel for the lithium ions is widened, and the ionic conductivity of the solid-state electrolyte material can be improved, enabling the battery containing the solid-state electrolyte material to have the excellent rate performance.

According to an embodiment of the present disclosure, lattice distortion of the solid-state electrolyte material ranges from 0.05% to 0.5%, for example, the lattice distortion of the solid-state electrolyte material may be 0.05%, 0.1%, 0.2%, 0.3%, 0.4%, 0.5%, etc. Thus, the transport channel for the lithium ions is widened, and the ionic conductivity of the solid-state electrolyte material can be improved, enabling the battery containing the solid-state electrolyte material to have the excellent rate performance.

According to an embodiment of the present disclosure, the ionic conductivity of the solid-state electrolyte material is greater than or equal to 5×10⁻⁴S/cm, for example, 5×10⁻⁴S/cm,1×10⁻⁴S/cm, 5×10⁻³S/cm, 1×10⁻³S/cm, 5×10⁻²S/cm, 1×10⁻²S/cm, 5×10⁻¹S/cm, 0.1S/cm, 1S/cm, 10S/cm, 100S/cm, etc. According to other embodiments of the present disclosure, the ionic conductivity of the solid-state electrolyte material is greater than or equal to 1×10⁻³S/cm. When the ionic conductivity of the solid-state electrolyte material is within the above-described range, the solid-state electrolyte material has a high ionic conductivity, which facilitates rapid transport of the lithium ions, enabling the battery containing the solid-state electrolyte material to have the excellent rate performance.

According to an embodiment of the present disclosure, an average particle size of the solid-state electrolyte material ranges from 0.05 µm to 0.5 µm, for example, 0.05µm, 0.1µm, 0.2µm, 0.3µm, 0.4µm, 0.5µm, etc. According to other embodiments of the present disclosure, the average particle size of the solid-state electrolyte material ranges from 0.05 µm to 0.1 µm. Controlling the average particle size of the solid-state electrolyte material within the above-described range can not only reduce the hindrance to lithium-ion transport caused by an excessively small particle size, but also avoid a prolonged lithium-ion transport path caused by an excessively large particle size of the solid-state electrolyte material. In this way, a transport speed of the lithium ions is improved, and the rate performance of battery is further improved.

According to an embodiment of the present disclosure, a pH value of the solid-state electrolyte material ranges from 6 to 10 at 25°C, for example, 6, 7, 8, 9, 10, etc. By limiting the pH value of the solid-state electrolyte material within the above-described range, gas generation caused by excessive high acidity of the solid-state electrolyte can be reduced. In addition, structural stability of the solid-state electrolyte material can be improved, and the impact of structural instability on the ionic conductivity can be reduced. Also, sufficient lithium is contained within the solid-state electrolyte material to improve purity and the ionic conductivity of the solid-state electrolyte material.

According to an embodiment of the present disclosure, the solid-state electrolyte material includes LiₓM¹_{y}M²_{z}Tiᵤ(PO₄)ᵥ₁(P₂O₇)ᵥ₂, where: M¹ includes at least one of Group 1 elements excluding Li; M² includes at least one of trivalent metal elements; and 1≤x<4, 0.1≤y≤0.5, 0.2<z≤0.5, 1<u≤5.5, 2≤v1≤6, and 0.1<v2≤3.

As an example, x may be 1, 2, 3, 3.5, 3.9, etc.; y may be 0.1, 0.2, 0.3, 0.4, 0.5, etc.; z may be 0.2, 0.3, 0.4, 0.5, etc.; u may be 1.1, 2, 3, 4, 5, 5.5, etc., v1 may be 2, 3, 4, 5, 6, etc.; and v2 may be 0.11, 0.5, 1, 2, 3, etc. According to other embodiments of the present disclosure, M¹ includes at least one of K, Rb, or Cs; and M² includes at least one of V, La, or Cr.

Therefore, by introducing the pyrophosphate ion into the unit cell of the LiTi₂(PO₄)₃ structure, controlling a v2-value, introducing the elements M¹ and M², and controlling a y-value and a z-value, M¹ can enter lithium vacancy in lattice to regulate lattice defects of the solid-state electrolyte, and M², with a large atomic radius, can act together with the pyrophosphate ion to further widen the transport channel for the lithium ions. To sum up, when the solid-state electrolyte material adopts a substance with the above-described structural formula, the ionic conductivity is further improved, which further facilitates the rapid transport of the lithium ions and improves the rate performance of the battery containing the solid-state electrolyte material.

The solid-state electrolyte material has both the phosphate ion and the pyrophosphate ion as a framework, which can increase a size of the unit cell of the solid-state electrolyte, and reduce a binding force on a charge carrier. As a result, the ionic conductivity of the solid-state electrolyte material is further improved, and the rate performance of the battery is improved.

In a second aspect of the present disclosure, a method for preparing the above-described solid-state electrolyte material is provided. According to an embodiment of the present disclosure, the method includes the following steps.

S100: mixing an M² source, a Ti source, a PO₄³⁻ source, a P₂O₇⁴⁻ source, a precipitant, and a solvent, co-precipitating, and filtering to obtain a precursor.

According to an embodiment of the present disclosure, the M² source, the Ti source, the PO₄³⁻ source, the P₂O₇⁴⁻ source, the precipitant, and the solvent may be commercially available products.

As an example, the M² source includes at least one of an M²-containing oxide, an M²-containing phosphate, an M²-containing sulfate, an M²-containing chloride, an M²-containing nitrate, or an M²-containing carbonate.

The Ti source includes at least one of a Ti-containing phosphate, a Ti-containing acetate, a Ti-containing sulfate, a Ti-containing chloride, a Ti-containing nitrate, or a Ti-containing carbonate.

The PO₄³⁻ source includes at least one of H₃PO₄, NH₄H₂PO₄, (NH₄)₂HPO₄, (NH₄)₃PO₄, LiH₂PO₄, Li₂HPO₄, Li₃PO₄, NaH₂PO₄, Na₂HPO₄, or Na₃PO₄.

The P₂O₇⁴⁻ source includes at least one of H₄P₂O₇, (NH₄)₂H₂P₂O₇, Li₂H₂P₂O₇, or Li₄P₂O₇.

The precipitant includes at least one of sodium hydroxide, sodium carbonate, or ammonia water.

According to an embodiment of the present disclosure, the solvent includes at least one of pure water, alcohols, or ethers.

S200: mixing the precursor with a Li source and an M¹ source, and sintering in an oxygen-containing atmosphere to obtain the solid-state electrolyte material.

According to an embodiment of the present disclosure, the M¹ source and the Li source may be commercially available products.

As an example, the M¹ source includes at least one of an M¹-containing oxide, an M¹-containing phosphate, an M¹-containing sulfate, an M¹-containing chloride, an M¹-containing nitrate, or an M¹-containing carbonate.

The Li source includes at least one of lithium carbonate, lithium hydroxide, or lithium nitrate.

According to an embodiment of the present disclosure, the oxygen-containing atmosphere includes oxygen or air.

According to an embodiment of the present disclosure, a temperature the sintering ranges from 600°C to 800°C, and a duration of the sintering ranges from 4 hours to 10 hours. For example, the temperature of the sintering may be 600°C, 650°C, 700°C, 750°C, 800°C, etc.; and the duration of sintering may be 4 hours, 5 hours, 7 hours, 9 hours, 10 hours, etc. The temperature of the sintering and the duration of the sintering are controlled within the above-described ranges. Thus, by controlling the temperature of the sintering and the duration of the sintering within the above-described ranges, a solid-state electrolyte material with high purity and a stable structure can be formed, thereby maintaining a high ionic conductivity.

In a third aspect of the present disclosure, a cathode active material is provided. The cathode active material includes a matrix and a coating layer disposed on at least part of a surface of the matrix. The coating layer includes the solid-state electrolyte material according to the first aspect of the present disclosure or the solid-state electrolyte material prepared by the method according to the second aspect.

Therefore, a surface of the cathode active material is coated with the solid-state electrolyte material. For the solid-state electrolyte material, the introduction of pyrophosphate ion and the doping of elements M¹ and M² into a unit cell of a conventional LiTi₂(PO₄)₃ structure lead to an increase in the unit cell parameters and the unit cell volume. As a result, the transport channel for lithium ions is widened. By coating the surface of the cathode active material with the above-described solid-state electrolyte material, a deintercalation rate the of lithium ions in the cathode active material can be increased, and an ionic conductivity of the cathode active material can be improved, enabling the battery containing the cathode active material to have excellent rate performance.

In addition, since the solid-state electrolyte material has a higher ionic conductivity, a transport rate of the lithium ions at the cathode-electrolyte interface is accelerated, improving capacity and rate performance of the cathode active material. Meanwhile, since the pyrophosphate ion have one oxygen vacancy compared with the phosphate ion, when oxygen evolution occurs in the matrix of the cathode active material due to the participation of anions in the reaction, the pyrophosphate ion in the coating layer can anchor active oxygen to form the phosphate ion, thereby maintaining the stability of the surface structure of the cathode active material, and improving the cycle retention rate. Also, strong oxidizability of the cathode active material in a charged state is reduced, and the gas generation of the battery is reduced.

According to an embodiment of the present disclosure, a thickness of the coating layer ranges from 10 nm to 500 nm, for example, the thickness of the coating layer may be 10 nm, 50 nm, 100 nm, 200 nm, 300 nm, 400 nm, 500 nm, etc. Therefore, by controlling the thickness of the coating layer within the above-described range, it can not only reduce the issue of the insignificant improvement in the ionic conductivity of the cathode active material caused by excessively low thickness of the coating layer, but also reduce the hindrance to the transport of the lithium ions caused by excessively high thickness of the coating layer. As a result, the cathode active material achieves a high ionic conductivity, enabling the battery containing the cathode active material to have the excellent rate performance.

According to an embodiment of the present disclosure, based on a total mass of the cathode active material, a mass proportion of the solid-state electrolyte material ranges from 0.01% to 1%, for example, the mass proportion of the solid-state electrolyte material may be 0.01%, 0.1%, 0.3%, 0.5%, 0.7%, 0.9%, 1%, etc. By controlling the mass proportion of the solid-state electrolyte material within the above-described range, a coating layer with an appropriate thickness is formed on the surface of the matrix, and the cathode active material achieves the high ionic conductivity, enabling the battery containing the cathode active material to have the excellent rate performance.

According to an embodiment of the present disclosure, in a Differential Scanning Calorimetry, DSC, measurement curve of the cathode active material, a temperature corresponding to an exothermic peak is greater than or equal to 220°C. For example, the temperature corresponding to the exothermic peak may be 220°C, 230°C, 250°C, 300°C, 400°C, etc.

According to an embodiment of the present disclosure, the matrix includes at least one of lithium cobalt oxide, lithium manganate, lithium nickel oxide, lithium nickel cobalt manganese oxide, lithium nickel cobalt aluminum oxide, lithium manganate, lithium nickel manganate, lithium iron phosphate, lithium manganese phosphate, or lithium manganese iron phosphate. Thus, the prepared cathode active material has the high ionic conductivity, enabling the battery containing the cathode active material to have the excellent rate performance.

According to an embodiment of the present disclosure, gas generation of a pouch battery assembled with the cathode active material after storage at 60°C for 7 days is less than or equal to 2 mL/Ah. It can be seen that the battery in the embodiments of the present disclosure has low gas generation.

In a fourth aspect of the present disclosure, the present disclosure provides a method for preparing the cathode active material according the third aspect. The method includes: S1: grinding the solid-state electrolyte material into nanoparticles, and mixing the nanoparticles with the matrix to obtain a mixture; and S2: performing heat treatment on the mixture in an oxygen-containing atmosphere to obtain the cathode active material.

In this way, the prepared cathode active material includes the matrix and the coating layer disposed on at least part of the surface of the matrix. The coating layer includes the solid-state electrolyte material according to the first aspect of the present disclosure or the solid-state electrolyte material prepared by the method according to the second aspect of the present disclosure. Thus, the surface of the cathode active material is coated with the solid-state electrolyte material. For the solid-state electrolyte material, the introduction of pyrophosphate ion and the doping of elements M¹ and M² into a unit cell of a conventional LiTi₂(PO₄)₃ structure lead to an increase in the unit cell parameters and the unit cell volume. As a result, the transport channel for the lithium ions is widened, and the ionic conductivity of the solid-state electrolyte material can be improved, enabling the battery containing the solid-state electrolyte material to have the excellent rate performance.

According to an embodiment of the present disclosure, the oxygen-containing atmosphere includes oxygen or air.

The heat treatment enables the solid-state electrolyte material of nanoparticles to adhere to the surface of the matrix better. According to an embodiment of the present disclosure, a temperature of the heat treatment ranges from 300°C to 500°C, and a duration of the heat treatment ranges from 2 hours to 8 hours. For example, the temperature of the heat treatment may be 300°C, 350°C, 400°C, 450°C, 500°C etc., and the duration of the heat treatment may be 2 hours, 4 hours, 5 hours, 7 hours, 8 hours, etc., all within the above-described temperature range and duration range. In this way, it is conducive to making the solid-state electrolyte material of the nanoparticles adhere to the surface of the matrix, which improves the ionic conductivity of the cathode active material. Meanwhile, it reduces the gas generation of the battery containing the cathode active material, thereby improving the capacity and the rate performance of cathode active material.

In a fifth aspect of the present disclosure, a cathode plate is provided. According to an embodiment of the present disclosure, the cathode plate includes the cathode active material according to the third aspect of the present disclosure, or the cathode active material prepared by the method according to the fourth aspect of the present disclosure.

According to an embodiment of the present disclosure, the cathode plate includes a cathode current collector and a cathode active material layer disposed on the cathode current collector. The cathode active material layer includes the above-described cathode active material. The cathode current collector may be a metal foil or a composite current collector (the composite current collector can be formed by disposing a metal material on a polymer matrix), for example, the cathode current collector may be an aluminum foil.

According to some embodiments of the present disclosure, the cathode active material layer may further optionally include a binder. As an example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, or fluorine-containing acrylate resin.

According to some embodiments of the present disclosure, the cathode active material layer may further optionally include a conductive agent. As an example, the conductive agent may include at least one of superconducting carbon, acetylene black, carbon black, Ketjen black, carbon dots, carbon nanotubes, graphene, or carbon nanofibers.

According to some embodiments of the present disclosure, the cathode plate can be prepared by the following method. Components for preparing the cathode plate, such as the cathode active material, the conductive agent, the binder, and any other components, are dispersed in a solvent (such as N-methylpyrrolidone) to form a cathode slurry. The cathode is coated on the cathode current collector, and followed by drying, cold pressing and other processes, to obtain the cathode plate.

It should be noted that, features and advantages described above for the cathode active material and its preparation method are also applicable to the cathode plate, which will not be repeated here.

In a sixth aspect of the present disclosure, a battery is provided. According to an embodiment of the present disclosure, the battery includes at least one of the solid-state electrolyte material according to the first aspect of the present disclosure, the solid-state electrolyte material prepared by the method according to the second aspect, or the cathode plate according to the fifth aspect.

As an example, the battery includes a cathode plate, an anode plate, an electrolyte, and a separator being located between the cathode plate and the anode plate. In a charge-discharge process of the battery, active ions are intercalated and deintercalated between the cathode plate and anode plate. The electrolyte acts as an ion conductor between the cathode plate and the anode plate. The separator is disposed between the cathode plate and the anode plate, mainly functioning to prevent a short circuit between the cathode plate and the anode plate while allowing ions to pass through.

According to an embodiment of the present disclosure, the anode plate includes a anode current collector and an anode active material layer disposed on the anode current collector. The anode active material layer includes an anode active material. The anode current collector may be a metal foil or a composite current collector (the composite current collector can be formed by disposing the metal material on the polymer matrix), for example, the cathode current collector may be the aluminum foil.

According to some embodiments of the present disclosure, the anode active material may include at least one of the following materials: artificial graphite, natural graphite, soft carbon, hard carbon, silicon-based material, tin-based material, lithium titanate, etc.

According to some embodiments of the present disclosure, the anode active material layer may further optionally include a conductive agent. The conductive agent may include at least one of superconducting carbon, acetylene black, carbon black, Ketjen black, carbon dots, carbon nanotubes, graphene, or carbon nanofibers.

According to some embodiments of the present disclosure, the anode active material layer may further optionally include other additives, such as a thickener (e.g., sodium carboxymethyl cellulose (CMC-Na)).

According to some embodiments of the present disclosure, the anode plate can be prepared by the following method. Components for preparing the anode plate, such as the anode active material, the conductive agent, and the binder, are dispersed in a solvent (e.g., deionized water) to form an anode slurry. The anode slurry is coated on the anode current collector, and followed by drying, cold pressing, and other processes, to obtain the anode plate.

According to other embodiments of the present disclosure, the anode plate may include a metal lithium plate or a lithium alloy, such as a lithium-indium alloy.

According to still other embodiments of the present disclosure, a type of the separator is not particularly limited, and any known porous-structured separator with good chemical stability and mechanical stability may be selected. As an example, a material of the separator may include at least one of glass fiber, non-woven fabric, polyethylene, polypropylene, or polyvinylidene fluoride. The separator may be a single-layer film or a multi-layer composite film, without particular limitation. When the separator is the multi-layer composite film, materials of each layer may be the same or different, without particular limitation.

According to yet other embodiments of the present disclosure, a type of the electrolyte is not particularly limited and can be selected according to requirements. For example, the electrolyte may be in a gel-like state or in an all-solid state. According to some specific embodiments of the present disclosure, for the electrolyte, an electrolyte solution is adopted, and the electrolyte solution includes lithium salt and a solvent.

According to some specific embodiments of the present disclosure, the lithium salt may include at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluorooxalatoborate, lithium dioxalatoborate, lithium difluorodioxalatophosphate or lithium tetrafluorooxalatophosphate.

According to some specific embodiments of the present disclosure, the solvent may include at least one of ethylene carbonate, propylene carbonate, ethyl methyl carbonate, diethyl carbonate, dimethyl carbonate, dipropyl carbonate, methylpropyl carbonate, ethylpropyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, ethylene glycol dimethyl ether, methyl ethyl sulfone or diethyl sulfone.

In some embodiments of the present disclosure, the electrolyte solution may optionally include additives. For example, the additives may include an anode film-forming additive, a cathode film-forming additive, and additives that can improve certain performance of the battery, such as additives that improve overcharge performance of the battery, and additives that improve high-temperature performance or low-temperature performance of the battery.

It should be noted that, features and advantages described above for the cathode plate are also applicable to the solid-state battery, which will not be repeated here.

In a seventh aspect of the present disclosure, an electrical device is provided. According to an embodiment of the present disclosure, the electrical device includes the above-described battery. According to an embodiment of the present disclosure, the electrical device may include but is not limited to a mobile phone, a laptop computer, an electric vehicle, etc.

It should be noted that, features and advantages described above for the battery are also applicable to the electrical device, which will not be repeated here.

The embodiments of the present disclosure are described below. The embodiments described below are exemplary and are merely used to explain the present disclosure, and cannot be construed to limit the present disclosure. The techniques or conditions without specific indication shall be those described in the literature in the field or in accordance with the product specification. The reagents or instruments used without the indication of the manufacturers are all conventional products that can be purchased commercially.

### Example1

### Preparation of the solid-state electrolyte material:

Vanadium oxide, titanyl sulfate, disodium hydrogen phosphate, and titanium pyrophosphate were mixed in pure water at a molar ratio of V³⁺:Ti⁴⁺:PO₄³⁻:P₂O₇⁴⁻=0.3:2.7:4:0.5. Sodium hydroxide was added as a precipitant. The mixture was heated to 60°C and stirred for 30 minutes to form a uniform precipitate. After filtration and drying, powder of a precursor was obtained.

The precursor, lithium carbonate, and potassium carbonate were weighed at a ratio of Li⁺:K⁺:PO₄³⁻= 2:0.3:4 and mixed uniformly in a high-speed mixer. The mixture was sintered in air at 700°C for 8 hours to obtain a micron-sized solid-state electrolyte material. The average particle size of the solid-state electrolyte material was 20 µm. The pH value of the solid-state electrolyte material was 6.5 at 25°C.

The micron-sized composite oxide solid-state electrolyte material was added into pure water to obtain a slurry with a solid-state content of 50%. The slurry was ball-milled with zirconium oxide for 6 hours in a ball mill to obtain a nano-slurry with an average particle size of less than 200 nm. The slurry was treated with a spray dryer to obtain a powder. The powder was dissociated and sieved to finally obtain a solid-state electrolyte nano-powder with a relatively uniform particle size distribution and a composition of Li₂K_{0.3}V_{0.3}Ti_{2.7}(PO₄)₄(P₂O₇)_{0.5}.

### Preparation of the cathode active material:

The obtained solid-state electrolyte nano-powder and the matrix of the cathode active material of LiNi_{0.9}Co_{0.05}Mn_{0.05}O₂ were weighed at a mass ratio of 0.1:100 and mixed uniformly in a high-speed mixer, and heat-treated at 400°C in an air atmosphere for 6 hours to obtain a solid-state electrolyte-coated cathode active material.

Preparation methods of Example 2 to Example 15 and Comparative Example 1 to Comparative Example 4 are the same as that of Example 1, and differences are detailed in Table 1.

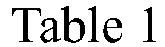

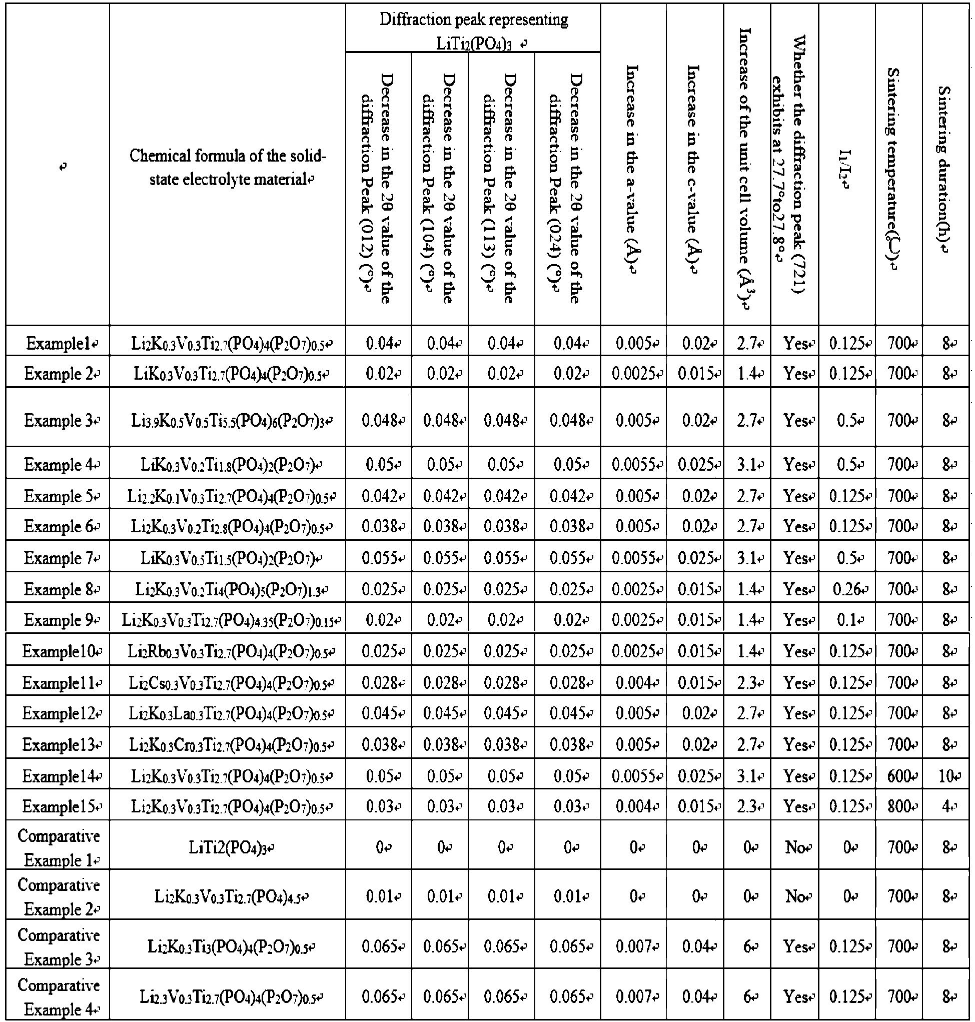

A method for preparing a button cell is as follows. The cathode active material, the solid-state electrolyte material, the acetylene black, and the polyvinylidene fluoride (PVDF) prepared in each example were mixed at a mass ratio of 90:2:3:5. The mixture was coated on an aluminum foil, dried, and pressed into a cathode plate with a diameter of 12 mm and a thickness of 120 µm under a pressure of 100 MPa. Subsequently, the cathode plate was placed in a vacuum drying oven and dried at 120°C for 12 hours. For an anode, a Li metal sheet with a diameter of 17 mm and a thickness of 1 mm was used. For a separator, a Celgard 2400 porous membrane with a thickness of 25 µm was used. For an electrolyte solution, 1 mol/L LiPF₆ in a mixture of equal amounts of ethylene carbonate (EC) and diethyl carbonate (DEC) was used. The cathode plate, the separator, the anode plate, and 4 µL of electrolyte solution were assembled into a 2025-type button cell in an argon (Ar) glove box with water content and oxygen content both less than 5 ppm.

### Performance test methods

### 1. Test method for the ionic conductivity of the solid-state electrolyte material

The test method for the ionic conductivity was as follows. 5 mg of nano-powder of the solid-state electrolyte material was pressed into a sheet sample in a steel mold with a diameter of 12 mm under a pressure of 200 MPa. Subsequently, the formed sheet sample was placed in a fixture, and an alternating current impedance test was performed on an electrochemical workstation to obtain the ionic conductivity.

### 2. X-ray diffraction, XRD, test method

The X-ray diffraction test method was as follows. Phase and crystal structure analysis was performed using an automatic X-ray diffractometer with an operating voltage of 40 kV, an operating current of 250 mA, continuous scanning adopted, a scanning speed of 4°/min, a step size of 0.02°, and a scanning angle ranging from 10° to 80°.

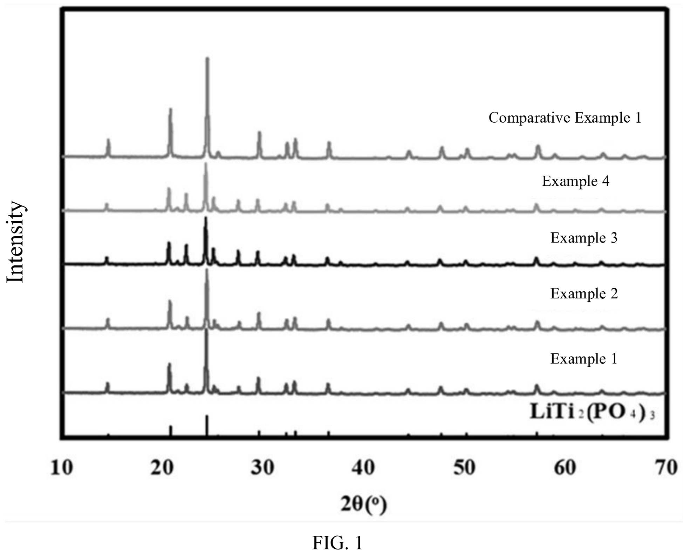

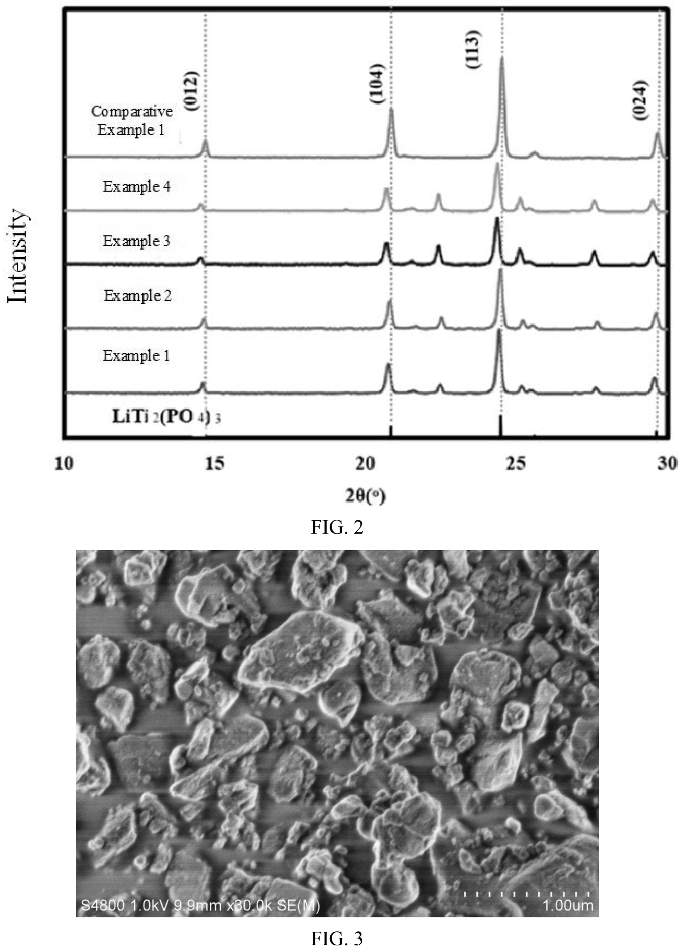

XRD patterns of the solid-state electrolyte materials of Example 1 to Example 4 and Comparative Example 1 were illustrated in FIG. 1 and FIG. 2. It can be seen that, compared with Comparative Example 1, the 20 values of the diffraction peaks representing LiTi₂(PO₄)₃ of the solid-state electrolyte materials of Example 1 to Example 4 were reduced compared with the 20 value of the corresponding diffraction peak in the standard pattern of LiTi₂(PO₄)₃. A reduced angle ranges from 0.02° to 0.06°.

A scanning electron microscope image of the solid-state electrolyte material of Example 1 was illustrated in FIG. 3. It can be seen that the solid-state electrolyte material was at the nanoscale, with an average particle size of approximately 200 nm.

### 3. Test method for the rate performance of the battery

The assembled batteries were subjected to rate performance test at 0.1C and 1C rates, and a ratio of capacity at 1C rate to capacity at 0.1C rate was calculated. Test results were shown in table 2.

**Table 2**

| | Ionic conductivity of the solid-state electrolyte material (S/cm) | Rate performance of the battery (%) |
|---|---|---|
| Example 1 | 1.5×10⁻³ | 97 |
| Example 2 | 1.1 ×10⁻³ | 95 |
| Example 3 | 1.8 ×10⁻³ | 97 |
| Example 4 | 2.2 ×10⁻³ | 98 |
| Example 5 | 1.5 ×10⁻³ | 97 |
| Example 6 | 1.4 ×10⁻³ | 96 |
| Example 7 | 2.2 ×10⁻³ | 98 |
| Example 8 | 1.1 ×10⁻³ | 95 |
| Example 9 | 1.1 ×10⁻³ | 95 |
| Example 10 | 1.1 ×10⁻³ | 95 |
| Example 11 | 1.1 ×10⁻³ | 95 |
| Example 12 | 1.5 ×10⁻³ | 97 |
| Example 13 | 1.5 ×10⁻³ | 97 |
| Example 14 | 2.2 ×10⁻³ | 98 |
| Example 15 | 1.4 ×10⁻³ | 96 |
| Comparative Example 1 | 2 ×10⁻⁵ | 85 |
| Comparative Example 2 | 1 ×10⁻⁴ | 87 |
| Comparative Example 3 | 1.5 ×10⁻⁴ | 89 |
| Comparative Example 4 | 1.2 ×10⁻⁴ | 88 |

As can be seen from Table 2, in Example 1 to Example 15 of the present disclosure, the 2θ values of the diffraction peaks representing LiTi₂(PO₄)₃ in the X-ray diffraction pattern of the solid-state electrolyte material were decreased by 0.02° to 0.06° compared with the 2θ value of the corresponding diffraction peak in the standard pattern of LiTi₂(PO₄)₃. However, the decreases in the 20 values in corresponding Comparative Example 1 to Comparative Example 4 are not within the range of 0.02° to 0.06°. The ionic conductivity of the solid-state electrolyte materials in Comparative Example 1 to Comparative Example 4 and the rate performance of the corresponding batteries were significantly lower than those of Example 1 to Example 15 of the present disclosure. It can be seen that, by controlling the 2θ value of the diffraction peak representing LiTi₂(PO₄)₃ in the X-ray diffraction pattern of the solid-state electrolyte material to be decreased by 0.02° to 0.06°compared with the 2θ value of the corresponding diffraction peak in the standard pattern of LiTi₂(PO₄)₃, the transport channel for the lithium ions is widened. In this way, the ionic conductivity of the solid-state electrolyte material can be improved, enabling the battery containing the solid-state electrolyte material to have the excellent rate performance.

In the specification, descriptions with reference to the terms "an embodiment", "some embodiments", "an example", "a specific example", or "some examples" etc., mean that particular features, structures, materials, or characteristics described in connection with the embodiment or example is included in at least one embodiment or example of the present disclosure. In this specification, the schematic representations of the above terms do not necessarily refer to the same embodiment or example. Further, the described particular features, structures, materials, or characteristics may be combined in any suitable manner in one or more embodiments or examples. In addition, different embodiments or examples and features of different embodiments or examples described in the specification may be combined by those skilled in the art without mutual contradiction.

Although embodiments of the present disclosure have been shown and described above, it should be understood that above embodiments are merely exemplary, and cannot be construed as a limitation on the present disclosure. For those skilled in the art, changes, modifications, replacements, and variations can be made to the embodiments without departing from the scope of the present disclosure.

## Claims

1. A solid-state electrolyte material, wherein:
the solid-state electrolyte material has a Na Super Ionic Conductor, NASICON, crystal structure; and
in an X-ray diffraction pattern of the solid-state electrolyte material, a 2θ value of a diffraction peak representing LiTi₂(PO₄)₃ is decreased by 0.02 ° to 0.06 ° compared with a 2θ value of a corresponding diffraction peak in a standard pattern of LiTi₂(PO₄)₃.

2. The solid-state electrolyte material according to claim 1, wherein:
the diffraction peak representing LiTi₂(PO₄)₃ comprises a diffraction peak (012), a diffraction peak (104), a diffraction peak (113), and a diffraction peak (024);
optionally, compared with unit cell parameters, a-value and c-value, of LiTi₂(PO₄)₃, a-value of the solid-state electrolyte material is increased by 0.002Å to 0.006Å, and c-value of the solid-state electrolyte material is increased by 0.01Å to 0.03Å, respectively;
optionally, compared with a unit cell volume of LiTi₂(PO₄)₃, a unit cell volume of the solid-state electrolyte material is increased by 1 Å³ to 3Å³; and
optionally, in the X-ray diffraction pattern of the solid-state electrolyte material, the solid-state electrolyte material has a diffraction peak (721) at a diffraction angle 2θ value ranging from 27.7° to 27.8°, wherein a peak intensity I₁ of the diffraction peak (721) and a peak intensity I₂ of the diffraction peak (113) satisfy 0.1≤I₁/I₂≤0.5.

3. The solid-state electrolyte material according to claim 1, wherein:
an ionic conductivity of the solid-state electrolyte material is greater than or equal to 5×10⁻⁴S/cm, and optionally greater than or equal to 1×10⁻³S/cm;
optionally, an average particle size of the solid-state electrolyte material ranges from 0.05 µm to 0.5 µm, and preferably ranges from 0.05 µm to 0.1 µm; and
optionally, a pH value of the solid-state electrolyte material ranges from 6 to 10 at 25°C.

4. The solid-state electrolyte material according to any one of claims 1 to 3, wherein the solid-state electrolyte material comprises LiₓM¹_{y}M²_{z}Tiᵤ(PO₄)ᵥ₁(P₂O₇)ᵥ₂, where:
M¹ comprises at least one of the elements in Group 1 of the periodic table, excluding Li;
M² comprises at least one of trivalent metal elements; and
1≤x<4, 0.1≤y≤0.5, 0.2<z≤0.5, 1<u≤5.5, 2≤v1≤6, and 0.1<v2≤3.

5. The solid-state electrolyte material according to claim 4, wherein:
M¹ comprises at least one of K, Rb, or Cs; and
optionally, M² comprises at least one of V, La, or Cr.

6. A method for preparing the solid-state electrolyte material according to any one of claims 1 to 5, the method comprising:
mixing an M² source, a Ti source, a PO₄³⁻ source, a P₂O₇⁴⁻ source, a precipitant, and a solvent, followed by co-precipitating and filtering, to obtain a precursor; and
mixing the precursor with a Li source and an M¹ source, and sintering the mixture in an oxygen-containing atmosphere, to obtain the solid-state electrolyte material.

7. The method according to claim 6, wherein:
the oxygen-containing atmosphere comprises oxygen or air;
optionally, a temperature of the sintering ranges from 600°C to 800°C, and a duration of the sintering ranges from 4 hours to 10 hours;
optionally, the M¹ source comprises at least one of an M¹-containing oxide, an M¹-containing phosphate, an M¹-containing sulfate, an M¹-containing chloride, an M¹-containing nitrate, or an M¹-containing carbonate;
optionally, the M² source comprises at least one of an M²-containing oxide, an M²-containing phosphate, an M²-containing sulfate, an M²-containing chloride, an M²-containing nitrate, or an M²-containing carbonate;
optionally, the Ti source comprises at least one of a Ti-containing phosphate, a Ti-containing acetate, a Ti-containing sulfate, a Ti-containing chloride, a Ti-containing nitrate, or a Ti-containing carbonate;
optionally, the PO₄³⁻ source comprises at least one of H₃PO₄, NH₄H₂PO₄, (NH₄)₂HPO₄, (NH₄)₃PO₄, LiH₂PO₄, Li₂HPO₄, Li₃PO₄, NaH₂PO₄, Na₂HPO₄, or Na₃PO₄;
optionally, the Li source comprises at least one of lithium carbonate, lithium hydroxide, or lithium nitrate;
optionally, the P₂O₇⁴⁻ source comprises at least one of H₄P₂O₇, (NH₄)₂H₂P₂O₇, Li₂H₂P₂O₇, or Li₄P₂O₇; and
optionally, the precipitant comprises at least one of sodium hydroxide, sodium carbonate, or ammonia water.

8. A cathode active material, comprising:
a matrix; and
a coating layer disposed on at least part of a surface of the matrix, wherein:
the coating layer comprises the solid-state electrolyte material according to any one of claims 1 to 5 or the solid-state electrolyte material prepared by the method according to claim 6 or 7.

9. The cathode active material according to claim 8, wherein:
a thickness of the coating layer ranges from 10 nm to 500 nm;
optionally, based on a total mass of the cathode active material, a mass proportion of the solid-state electrolyte material ranges from 0.01% to 1%;
optionally, in a Differential Scanning Calorimetry, DSC, measurement curve of the cathode active material, a temperature corresponding to an exothermic peak is greater than or equal to 220°C; and
optionally, the matrix comprises at least one of lithium cobalt oxide, lithium manganate, lithium nickel oxide, lithium nickel cobalt manganese oxide, lithium nickel cobalt aluminum oxide, lithium manganate, lithium nickel manganate, lithium iron phosphate, lithium manganese phosphate, or lithium manganese iron phosphate.

10. A method for preparing the cathode active material according to claim 8 or 9, the method comprising:
grinding the solid-state electrolyte material into nanoparticles, and mixing the nanoparticles with the matrix to obtain a mixture; and
performing heat treatment on the mixture in an oxygen-containing atmosphere to obtain the cathode active material.

11. The method according to claim 10, wherein:
the oxygen-containing atmosphere comprises oxygen or air;
optionally, a temperature of the heat treatment ranges from 300°C to 500°C, and a duration of the heat treatment ranges from 2 hours to 8 hours.

12. A cathode plate, comprising:
the cathode active material according to claim 8 or 9; or
the cathode active material prepared by the method according to claim 10 or 11.

13. A battery, comprising at least one of the solid-state electrolyte material according to any one of claims 1 to 5, the solid-state electrolyte material prepared by the method according to claim 6 or 7, and the cathode plate according to claim 12.

14. An electrical device, comprising the battery according to claim 13.
